(19) Europäisches Patentamt
European Patent Office
Office européen des brevets

(11) Publication number: 0 389 690 A1

(12) **EUROPEAN PATENT APPLICATION**

(21) Application number: 89200794.9

(51) Int. Cl.[5]: G03C 3/00, C08K 5/20

(22) Date of filing: 29.03.89

(43) Date of publication of application: 03.10.90 Bulletin 90/40

(84) Designated Contracting States: AT BE CH DE ES FR GB GR IT LI LU NL SE

(71) Applicant: AGFA-GEVAERT naamloze vennootschap
Septestraat 27
B-2510 Mortsel(BE)

(72) Inventor: Van Rossen, Antoine Roberta
Luikersteenweg 176
B-3815 Brustem(BE)
Inventor: Van Engeland, Jozef Leonard
Statiestraat 168
B-2580 St. Katelijne-Waver(BE)
Inventor: Villé, Frans Jan
Rombout Keldermansstraat 22
B-2520 Edegem(BE)

(54) **Antistatic packaging material for photographic materials.**

(57) The invention relates to photography and more in particular to an antistatic packaging material for photographic materials. In accordance with the invention, a single or laminated thermoplastic packaging material for photographic materials comprising between 1 and 10 % by weight of carbon black is disclosed, wherein the inner face layer contacting the photographic material comprises an antistatic agent corresponding to the following general formula :

$R_1$-X-$R_2$

wherein :

$R_1$ is an alkyl group with minimum six carbon atoms, and preferably at most 20 carbon atoms,

$R_2$ is $-(CH_2)_nO-R_4$,

n being 2, 3 or 4,

$R_4$ being H or lower alkyl, and

X is a linking group such as COO,

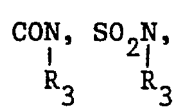

$R_3$ is hydrogen or has the same meaning as $R_2$.

EP 0 389 690 A1

# ANTISTATIC PACKAGING MATERIAL FOR PHOTOGRAPHIC MATERIALS

This invention relates to photography and more in particular to an antistatic packaging material for photographic materials.

Different types of packaging materials for photosensitive materials have been developed for various applications, and various properties have been optimised for each particular application.

Among the main properties for packaging materials for photosensitive materials can be mentioned : physical strength such as tear, breaking, impact puncture strength, wear resistance, moisture proof, gas-tightness, light shielding, seal-ability, in particular hot-seal ability, flatness and last but not least antistatic properties.

Generally, it is difficult to satisfy these properties by a single material. Therefore apart from the single layer packaging films of e.g. low-density polyethylene, containing carbon black or another pigment, more complex, laminated film structures have been developed. Laminated film structures of e.g. polyethylene with a flexible sheet such as paper or aluminium foil have been employed.

It is known that hydrophobic resin sheet and web materials of low conductivity readily become electrostatically charged by friction and/or contact with materials which are differently located in the tribo-electric range. The charging occurs particularly easily in a relatively dry atmospheric environment. Sheets and webs of hydrophobic resins, e.g. polyesters or cellulosetriacetate, are commonly used as support element of photographic materials.

When a photosensitive film is taken out of a (laminated) film package, slipping of said film against the thermoplastic film package material occurs.

The packaging materials disclosed in the prior art in general have shown insufficient slipping character against photosensitive materials, which results in electrostatic adhesion of the photosensitive films to the packaging material and consequently blocking of said photosensitive materials. This insufficient slipping character further may cause sparking. In unprocessed photographic silver halide emulsion materials sparking causes developable fog and degrades the image quality.

In order to reduce electrostatic charging of sheet or web materials comprising a hydrophobic resin support coated with at least one silver halide emulsion layer it is known to incorporate ionic compounds in these materials, e.g. in the silver halide emulsion layer(s). In order to avoid diffusion of ionic compounds out of a silver halide emulsion layer during its different wet processing treatments, preference has been given to antistatic high molecular weight polymeric compounds having ionic groups at frequent intervals in the polymer chain [ref. Photographic Emulsion Chemistry, by G.F. Duffin, - The Focal Press - London and New York (1966) - Focal Press Ltd., p. 168].

Apart from the reduction of electrostatic charging in silver halide emulsion materials, efforts also have been made to reduce the electrostatic charging of packaging materials for such photosensitive materials.

As disclosed in "the Encyclopedia of Polymer Science and Engineering", page 111, Chapter on 'Antistatic Agents', Carbon black can be used as an antistat in plastics and rubbers because of its high electrical conductivity properties.

In packaging materials for photo-sensitive materials carbon black is usually employed so as to make said materials light-shielding. The light-shielding effect of carbon black appears at 1 wt % and remarkably appears at more than 3 wt %. However, when too large an amount of carbon black is added, the physical strength of the packaging material is lowered. A suitable content of carbon black in view of optimally using its light-shielding properties therefore is in the range of 0.1 to 15 wt and the range of 3 to 7 wt % is particularly preferable. Concomitantly with its light-shielding character the carbon black confers some antistatic property to the concerned packaging material.

Useful types of carbon black are set forth in US Patent 4,701,359. Preferably carbon black is blended into the inner face layer which contacts the photosensitive materials to be packaged. By that location it reduces the occurrence of blocking and it gives a slipping character.

Further, US Patent 4,701,359 discloses the use of fatty acid amide lubricants for further improvement of the packaging aptitude and solution of blocking problems.

The effect of the incorporation of antistatic agents in packaging materials can be evaluated by measuring the charge decay time (hereinafter referred to as CDT) as described on pages 104 and following of the 'Encyclopedia of Polymer Science and engineering', Vol. 2.

Usual charge decay times of a thermoplastic material such as Low Density Poly Ethylene (hereinafter referred to as LDPE), without particular antistatic compounds being added, is approximately 1 minute.

From the teaching of the prior art, such as US Patent 4,565,743, it is known that polyglycolethers may be used as antistatic agents in hydrophobic materials such as thermoplastic packaging materials.

Now the following experiment was executed : a LDPE-masterbatch material containing 5 % of a cocamide polyglycolether corresponding to the general formula $R-CO-NH-(CH_2-CH_2-O)_n-H$ was added in a concentration of 4 % by weight to a transparent LDPE material containing no carbon black. The antistatic properties of the resulting material were evaluated by measuring the charge decay time of said material which appeared to be as follows :

CDT after one day : 0,3 sec

CDT after one month : 0,3 sec

From the above values it may be concluded that the above compound comprising a polyglycol ether group is suitable as antistat for use in thermoplastic packaging materials.

Then, in the so obtained transparent LDPE-material, although it exhibits excellent antistatic properties, a common light-shielding pigment e.g. carbon black, was incorporated. From the experiments set forth below, it appears that the antistatic effect of compounds such as the cocamide compound described above is to a large extent annulled by the presence of the carbon black particles in the packaging material concerned.

This is illustrated by the experimental results set forth in Table I hereinafter. In said Table the first column indicates the amount in weight % of the masterbatch of LDPE which contains 5 % of the cocamide compound described above, relative to the LDPE material comprising 10 % of carbon black with which the masterbatch is mixed. The second column shows the concentration in weight % of the cocamide compound in the final LDPE packaging product, and the last three columns indicate the CDT in seconds of this LDPE product after resp. one day, one week and one month.

From the said results it appears that although the cocamide compound is in fact an internal antistatic agent, this means an agent that is incorporated into the polymer from which the packaging material is subsequently made and not a topical agent which is applied directly to the surface of the packaging material, such antistatic compound substantially tends to migrate to the surface of the packaging material.

On the other hand, from the said results it is apparent, as may be expected, that the higher the concentration of the cocamide compound in the final packaging material, the lower the CDT of the resulting material. The latter remains valid during an initial period of up to one month after the manufacture of the packaging material. As the antistatic agents tend to migrate to the surface of the material, it appears that after one month, and provided a minimum concentration of antistat is used, the CDT of the material after the one month period does not decrease any further by further increasing the concentration of the antistat.

As a conclusion it may be set forth that in spite of the above described developments for the improvement of the electrostatic charging properties of photosensitive materials and the corresponding, carbon black containing packaging materials, the above described problems of electrostatic adhesion of the photographic films against the packaging material and the blocking against said photosensitive materials still remain insufficiently solved.

It is therefore an object of the invention to provide a carbon-black containing packaging material for photosensitive materials which is superior in antistatic properties and which does not affect photosensitive materials.

In accordance with the present invention there is provided a single or laminated thermoplastic packaging material for photographic materials comprising between 1 and 10 % by weight of carbon black, characterized in that the inner face layer contacting the photographic material comprises an antistatic agent corresponding to the following general formula :

$R_1-X-R_2$

wherein :

$R_1$ is an alkyl group with minimum six carbon atoms, and preferably at most 20 carbon atoms,

$R_2$ is $-(CH_2)_nO-R_4$,

n being 2, 3 or 4,

$R_4$ being H or lower alkyl, and

X is a linking group such as COO,

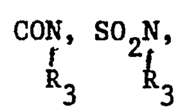

$R_3$ is hydrogen or has the same meaning as $R_2$.

According to a preferred embodiment of the present invention, the thermoplastic packaging material consists substantially of Low Density Poly Ethylene or Poly Propylene.

In Table II the experimental results in terms of CDT are mentioned of a packaging material consisting

substantially of LDPE and comprising a lauric acid diethanol amide corresponding to the following formula :

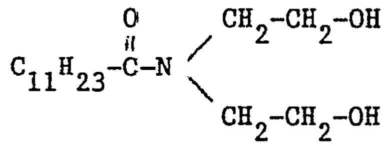

From the said results it appears surprisingly that the antistatic properties of this antistatic compound are to a much lesser extent annulled by the presence - in an amount of 10 wt % - of carbon black in the said packaging material.

Also from the said results it appears that a concentration of at least 0,15 % of the captioned antistatic agent is preferred so as to effectively reduce the CDT of a packaging material containing 10 % of carbon black.

As set forth supra, the concentration of carbon black in the final packaging material in practice seldom exceeds 7 % in view of the required mechanical strength of the packaging material, and in most cases amounts to approximately 5 %. Unter these circumstances it may be expected that the antistatic effect of the mentioned antistatic compound on the packaging material will still be higher in practice, resulting in still lower values for the CDT of the packaging material, as the inhibition of the said antistatic compound by the carbon black present in practical packaging material shall be less.

Therefore it may be expected that when the concentration of carbon black in the thermoplastic packaging material is e.g. 5 %, an mount of 0.05 % of the captioned antistatic agent is sufficient.

For the addition of carbon black and the antistatic agent to the packaging material the usually employed masterbatch method is preferred. According to this method, masterbatches are prepared by blending usually more than 10 % of carbon black, resp. of the selected antistatic agent with the thermoplastic polymer, e.g. LDPE.

Hereafter the packaging material thermoplastic, e.g. LDPE or another polyolefin is mixed with appropriate amounts of the separately prepared masterbatches so that the prescribed concentrations of carbon black, resp. antistatic agent in the final packaging material are obtained.

The packaging films according to the invention may further contain any of the agents conventionally employed in the manufacture of thermoplastic polymeric packaging materials. Agents such as plasticizers, pigments, anti-oxidants, lubricants, gloss-improvers, coloring agents, surface active agents, thermo-stabilizers, ultra-violet light stabilizers, re-inforcing agents, fillers and finally various thermoplastic resins and rubbers.

The packaging material of the invention is particularly suitable for packaging all kinds of photographic materials such as silver halide photographic materials for use in radiographic, cinematographic, graphic, micrographic applications, diffusion-transfer type photographic materials or any other type of photographic materials.

Table I

| Charge Decay Times of LDPE Packaging Material containing 10 % carbon black. | | | | |
|---|---|---|---|---|
| % of masterbatch containing 5 % of cocamide compound | concentration in % of cocamide compound in LDPE Packaging Material | CDT after one day | CDT after one week | CDT after one month |
| 3 | 0,15 | > 60 | 5.5 | 3.0 |
| 4 | 0,20 | > 60 | 3.0 | 2.7 |
| 5 | 0,25 | > 60 | 3.1 | 3.0 |
| 6 | 0,30 | 2.0 | 1.0 | 3.0 |

Table II

| Charge Decay Times of LDPE Packaging Material containing 10 % carbon black. | | | | |
|---|---|---|---|---|
| % of masterbatch containing 5 % of lauric acid diethanolamide | concentration in % of lauric acid diethanol amide in LDPE Packaging Material | CDT after one day | CDT after one week | CDT after one month |
| 3 | 0,15 | > 60 | 1.5 | 0.8 |
| 4 | 0,20 | 3.2 | 0.8 | 0.4 |
| 5 | 0,25 | 2.2 | 0.5 | 0.4 |
| 6 | 0,30 | 0.6 | 0.3 | 0.3 |

**Claims**

1. A single or laminated thermoplastic packaging material for photographic materials comprising between 1 and 10 % by weight of carbon black, characterised in that the inner face layer contacting the photographic material comprises an antistatic agent corresponding to the following general formula :
$R_1$-X-$R_2$
wherein :
$R_1$ is an alkyl group with minimum six carbon atoms, and preferably at most 20 carbon atoms,
$R_2$ is $-(CH_2)_nO-R_4$,
n being 2, 3 or 4,
$R_4$ being H or lower alkyl, and
X is a linking group such as COO,

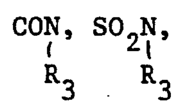

$R_3$ is hydrogen or has the same meaning as $R_2$.

2. A packaging material as defined in claim 1, wherein the antistatic agent is lauric acid diethanolamide.

3. A packaging material as defined in claim 1 or 2, comprising the antistatic agent in an amount of at least 0.05 % by weight.

4. A packaging material as defined in any of the preceding claims, wherein the thermoplastic packaging material consists substantially of Low Density Poly Ethylene or Poly Propylene.

European Patent Office

# EUROPEAN SEARCH REPORT

Application Number

EP 89 20 0794

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
| --- | --- | --- | --- |
| X,Y | GB-A- 906 174 (MONSANTO)<br>* Page 1, lines 52-64; claims * | 1-4 | G 03 C 3/00<br>C 08 K 5/20 |
| Y | EP-A-0 237 062 (FUJI PHOTO FILM)<br>* Page 4, lines 14-44; claims * | 1-4 | |
| Y | CHEMICAL ABSTRACTS, vol. 97, 1982, page 53, abstract no. 183556f, Columbus, Ohio, US; M.K. BERNETT et al.: "Antistatic agents, lubricants, and precision bearings", & LUBR. ENG. 1982, 38(8), 481-6<br>* Abstract * | 1-4 | |
| Y | US-A-3 183 202 (W. BAIRD et al.)<br>* Column 1, lines 32-36; claims * | 2-4 | |
| A | CHEMICAL ABSTRACTS, vol. 80, 1974, page 353, abstract no. 151109v, Columbus, Ohio, US; & JP-A-73 87 826 (KONISHIROKU PHOTO INDUSTRY CO., LTD) 17-11-1973 | | TECHNICAL FIELDS SEARCHED (Int. Cl.5) |
| A | EP-A-0 127 084 (POLYPLASTICS)<br>* Claims 1,4 * | | G 03 C<br>C 08 K |
| A | DE-A-2 165 428 (MONSANTO CHEMICALS) | 1-4 | |

The present search report has been drawn up for all claims

| Place of search | Date of completion of the search | Examiner |
| --- | --- | --- |
| THE HAGUE | 25-10-1989 | PHILOSOPH L.P. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document